# EUROPEAN PATENT APPLICATION

(11) **EP 3 525 391 A1**
(43) Date of publication of application: **14.08.2019**
(21) Application number: 18305126.7
(22) Date of filing: 07.02.2018
(51) Int. Cl.: H04L 9/08, H04L 9/06, H04L 9/32, H04L 29/06, G06F 21/57

(54) **DEVICE AND METHOD FOR KEY PROVISIONING**

(71) Applicant: THOMSON LICENSING, 92130 Issy les Moulineaux (FR)
(72) Inventor: PEETERS, Gino, 2650 Edegem (BE); VERWERFT, Steve, 2650 Edegem (BE)
(74) Representative: Ståhl, Björn Niclas

(57) **Abstract**

A Vendor (110) provides (S202, S206) a session key and an encrypted secret to a HW Manufacturer (120) that provides (S208) these to a device (140). The device (140) encrypts (S210) the session key using a hardware key unavailable outside its cryptographic engine and stores (S212) the encrypted session key. The HW Manufacturer then ships (S216) the device to a SW Installer (130) that receives (S218) an encrypted master key from the Vendor (110) and sends (S220) this to the device, which decrypts (S222) the session key that is used to decrypt (S224) the master key, which then is reencrypted (S226) using the hardware key and stored (S228). The SW Installer then provides (S230) a signed and encrypted SW image to the device that decrypts the encrypted SW image, verifies the signature, and if the signature is successfully verified, executes (S232) the unencrypted SW image to prove that the SW image booted and executes and that other software in the device is legitimate to run on the device. The SW Installer can then release the device.

## Description

### TECHNICAL FIELD

The present disclosure relates generally to device manufacture and in particular to provisioning of secret information during manufacture of such devices.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In customer premises equipment (CPE), such as gateways, decoders, televisions, smartphones and tablets, there is often a need to store secrets in a such a way that an unauthorized party (e.g. hackers) cannot retrieve the secrets easily. The secrets could include different cryptographic keys, access codes and so on.

A commonly applied strategy is to store the secrets in encrypted form in flash memory to prevent a hacker from simply removing the flash memory and reading out the secrets using a flash programmer or reader.

Storing the data in encrypted form in the flash memory shifts the problem towards the protection of the master encryption key ("master key") that is used for encryption and decryption. To solve this problem, hardware vendors provide cryptographic engines in Systems-on-Chip ("SoC"), combined with a random key ("hardware key") generated by and stored inside the SoC itself. This hardware key is not known upfront, is not retrievable by software, and can only be used by the cryptographic engine in the SoC. Once the master key has been transferred to the CPE, it can request the cryptographic engine to encrypt the master key with the hardware key, and store the encrypted master key in the flash memory.

However, using SoCs, it is still difficult to secure the transfer of the master key. This transfer usually occurs during manufacture, at an original design manufacturer ("ODM"), which typically should not be considered a trusted party in this process. The hardware key cannot be used to protect the transfer since it is specific to each cryptographic engine and unavailable outside of it. There is no easy conventional way to guarantee that the CPE is not compromised by the ODM that hence could steal the master key.

Qualcomm's Machiatto protocol provides a solution to the problem by providing, based on the hardware key, a public key to encrypt the transfer of the master key. The protocol also uses a white list of SoCs to ensure that the master key is only transferred to specified CPE. A first downside of the Machiatto protocol is that it does not offer full protection against compromised CPE; a malicious ODM could run rogue software on the CPE to intercept the master key. A second disadvantage is that the Machiatto protocol is not available on all SoCs, only on a limited subset of Qualcomm SoCs.

It will thus be appreciated that there is a desire for a solution that addresses at least some of the shortcomings of the provision of secrets to CPE devices when performed by a non-trusted party. The present principles provide such a solution.

### SUMMARY OF DISCLOSURE

In a first aspect, the present principles are directed to a method comprising, at a device, receiving a session key, receiving at least one encrypted secret, the at least one secret encrypted using a master key, encrypting, using a cryptographic engine, the session key using a hardware key unavailable outside the cryptographic engine to obtain an encrypted session key, storing the encrypted session key, receiving the master key encrypted using the session key, decrypting the encrypted session key using the hardware key, decrypting the encrypted master key using the decrypted session key, and reencrypting the decrypted master key using the hardware key.

Various embodiments of the first aspect include:
- That the method further comprises storing the reencrypted master key.
- That the method further comprises decrypting the at least one secret using the master key and using the at least one secret.
- That the session key and the at least one encrypted secret are received from a first entity and the encrypted master key is received from a second entity, distinct from the first entity.
- That the method further comprises receiving an encrypted software image and a signature for the software image, decrypting the encrypted software image using the hardware key to obtain an unencrypted software image, verifying the signature, and if the signature is successfully verified, executing the unencrypted software image to prove that the software image booted and executes and that other software in the device is legitimate to run on the device.

In a second aspect, the present principles are directed to a device comprising memory, at least one communication interface configured to receive a session key, receive at least one encrypted secret, the at least one secret encrypted using a master key, and receive the master key encrypted using the session key and a hardware cryptographic engine configured to encrypt the session key using a hardware key unavailable outside the cryptographic engine to obtain an encrypted session key, store the encrypted session key in the memory, decrypt the encrypted session key using the hardware key, and reencrypt the decrypted master key using the hardware key. The cryptographic engine is further configured to decrypt the encrypted master key using the decrypted session key or the device further comprises at least one hardware processor configured to decrypt the encrypted master key using the decrypted session key.

Various embodiments of the second aspect include:
- That the hardware cryptographic engine is further configured to store the reencrypted master key in the memory.
- That at least one of the cryptographic engine and the at least one hardware processor is further configured to decrypt the at least one secret using the master key and use the at least one secret.
- That the session key and the at least one encrypted secret are received from a first entity and the encrypted master key is received from a second entity, distinct from the first entity.
- That the at least one communication interface is further configured to receive an encrypted software image and a signature for the software image, at least one of the cryptographic engine and the at least one hardware processor is further configured to decrypt the encrypted software image using the hardware key to obtain an unencrypted software image, verify the signature, and if the signature is successfully verified, wherein the at least one hardware processor is further configured to execute the unencrypted software image to prove that the software image booted and executes and that other software in the device is legitimate to run on the device.

### BRIEF DESCRIPTION OF DRAWINGS

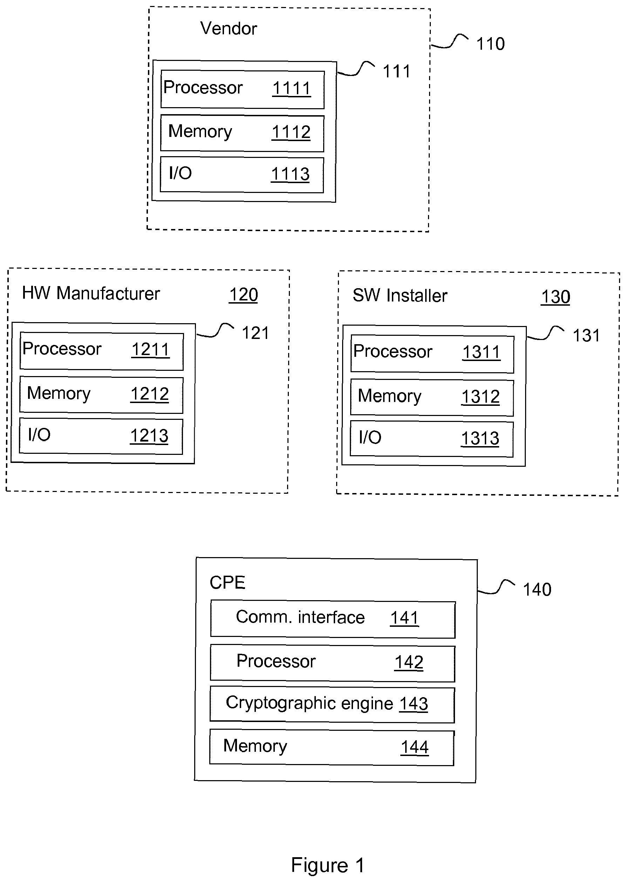

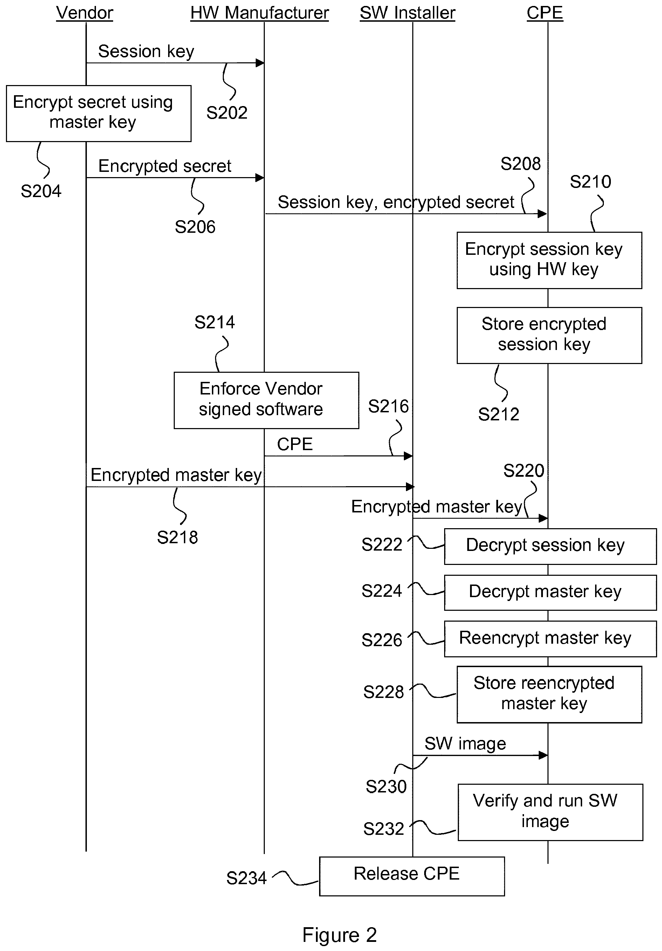

Features of the present principles will now be described, by way of nonlimiting example, with reference to the accompanying drawings, in which: Figure 1 illustrates an exemplary system implementing the present principles; and Figure 2 illustrates a method according to an embodiment of the present principles.

### DESCRIPTION OF EMBODIMENTS

Figure 1 illustrates an exemplary system 100 implementing the present principles. The system 100 includes a first entity, "Vendor" 110, that requests other entities to manufacture Customer Premises Equipment (CPE) 140 on its behalf to sell or otherwise deliver the manufactured CPE. The system 100 further includes a first manufacturer, "HW Manufacturer" 120, and a second manufacturer, "SW Installer" 130.

The Vendor 110 includes at least one device 111 having a hardware processor 1111, memory 1112 and a communication interface 1113 configured to communicate with the HW Manufacturer 120 and the SW Installer 130 as described hereinafter.

The HW Manufacturer 120 that can be a so-called Original Design Manufacturer (ODM) includes manufacturing equipment configured to manufacture CPE upon a request from the Vendor 110. The HW Manufacturer 120 also includes at least one device 121 having a hardware processor 1211, memory 1212 and a communication interface 1213 configured to communicate with the Vendor 110 and the SW Installer 130 as described hereinafter.

The SW Installer 130 includes equipment configured to provide software into CPE and at least one device 131 having a hardware processor 1311, memory 1312 and a communication interface 1313 configured to communicate with the Vendor 110 and the HW Manufacturer 120 as described hereinafter.

It is presumed that the HW Manufacturer and the SW Installer are independent entities and that they are not expected to communicate anything about the CPE except as indicated hereinafter. This is a reasonable assumption if they for example are different companies not owned by the same mother company.

A CPE 140 includes at least one communication interface 141 configured for communication with devices at the HW Manufacturer and the SW Installer, at least one hardware processor 142, a hardware cryptographic engine (such as a System-on-Chip, as previously described) 143 and at least one memory 144. The at least one hardware processor 142 is configured to control the CPE 140 while the cryptographic engine 143 is configured to perform cryptographic functions, in particular encryption and decryption using a hardware key that is unavailable outside the cryptographic engine.

Figure 2 illustrates a method according to an embodiment of the present principles.

In step S202, the Vendor sends a session key to the HW Manufacturer. It is noted that there is no requirement to encrypt the session key. The session key can be (probably or truly) unique to each CPE, which comes at the cost of maintaining pairs of CPE serial number and session key, but further reduces the risk in case of leakage of information between HW Manufacturer and SW Installer. The session key can also be (probably or truly) unique to a plurality of CPE or shared by all the CPE that are to be manufactured.

In step S204, the Vendor encrypts at least one secret using a master key and sends, in step S206 the encrypted at least one secret to the HW Manufacturer for installation in the CPE.

In step S208, the HW Manufacturer transfers the session key and the encrypted secrets to the CPE.

In step S210, the CPE encrypts the session key using its own hardware key, and stores, in step S212, the encrypted session key and the at least one encrypted secret in memory, such as flash memory. It is noted that the encrypted session key and the at least one encrypted secret can be stored in two or more different physical memories.

As will be appreciated by the skilled person, the master key is not involved at the HW Manufacturer, nor is the session key retrievable from the CPE by off-line investigation since it is stored in encrypted form. In addition, the at least one secret cannot be read by any of the party but the Vendor, since the master key is not yet provisioned. If the software relies on one or more of these secrets, dummy replacements should preferably be used.

At step S214, the HW Manufacturer enforces that only software signed by the vendor can run on the CPE. It is noted that this restriction can be limited to for example the operating system only that then can determine restrictions on further software such as applications. This can be done using existing technologies, usually referred to as secure boot (or verified boot or trusted boot). An exemplary way of enabling secure boot is to write a public cryptographic key in a write-once, non-volatile memory and rely on hardware support available in the SoC to enforce only booting software which is signed with the corresponding private key. A chain of these verifications can be built - the hardware enforces the bootloader that in turn enforces running software and so on - to build a chain of trust, as is known in the art.

In step S216, the HW Manufacturer ships the CPE physically to the SW Installer.

In step S218, the Vendor sends the master key encrypted using the session key and a signed and preferably encrypted software image to the SW Installer that transfers the encrypted master key to the CPE in step S220.

In step S222, the CPE decrypts the session key using the hardware key, decrypts, in step S224, the encrypted master key using the decrypted session key, encrypts, in step S226, the decrypted master key using the hardware key and stores, in step S228, the reencrypted master key in memory, for example the Flash memory.

The skilled person will appreciate that the session key the can be discarded as it is no longer relevant. In addition, at the SW Installer, the master key is always encrypted outside the CPE, and none of the keys needed for decryption is visible outside the CPE. Obtaining the master key in the clear is only possible if the HW Manufacturer and the SW Installer collaborate.

The SW Installer then ensures that the software running on the CPE is trusted by the Vendor, to ensure that it will not leak the master key. To do this, the SW Installer transfers, in step S230, the encrypted software image to the CPE. The software image can for example be encrypted by the master key or using a further encryption key that is protected during transfer through encryption using the master key.

In step S232, the CPE decrypts the encrypted software image, verifies the signature of the software image using the chain of trust (from hardware through for example bootloader) and, in case the signature is successfully verified, runs the decrypted software image from memory, typically RAM.

The software image includes:
- a private key, to prove towards equipment of the SW Installer that it is the software image that is booted, and
- a software routine configured to verify (possibly using a comparison of hash values and/or public key cryptography) that the content - including at least the bootloader and the public key the bootloader will use to verify the rest of the software - programmed in the memory (the flash) at the HW Manufacturer comes from the vendor, and that the chain of trust is intact.

Upon confirmation from once the last software routine that the memory content has not been tampered with, i.e. upon successful proofs and verifications, the SW Installer releases, in step S234, the CPE for example by shipping, with all secrets securely provisioned. It is noted that since the secrets were encrypted using the master key and that the master key now is available to the CPE, the CPE can decrypt and use these secrets.

The skilled person will appreciate that the present principles can provide protection against for example the following type of attacks:
- The HW Manufacturer tries to obtain the master key by not enabling the chain of trust and installing rogue software, which behaves almost like the Vendor software and remains dormant until the CPE is attached to the Internet, at which time it can send back the master key. This attack is detected at the verification step at the SW Installer, where the memory content will be found to be different. Also, the HW Manufacturer has no way to fake running the verification software image at the SW Installer, since software image is encrypted (indirectly) with the master key, and contains a private key to authenticate the software image, which is information that the HW Manufacturer does not have.
- The SW Installer tries to obtain the master key by installing rogue software on the CPE. This is prevented by the chain of trust which is enabled at the HW Manufacturer.
- Anyone trying to read out the memory (i.e. the flash) off-line will only retrieve encrypted data. The root of this encryption chain is the hardware key, which is stored securely inside the SoC and by design never exposed.

It will thus be appreciated that the present principles can provide a manufacturing solution that it can be applied to all SoCs that have a cryptographic engine, a hardware key and a secure boot mechanism in order to protect the CPE against different attacks designed to obtain secret information.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A method comprising at a device (140):
receiving (S208) a session key;
receiving (S208) at least one encrypted secret, the at least one secret encrypted using a master key;
encrypting (S210), using a cryptographic engine, the session key using a hardware key unavailable outside the cryptographic engine to obtain an encrypted session key;
storing (S212) the encrypted session key;
receiving (S220) the master key encrypted using the session key;
decrypting (S222) the encrypted session key using the hardware key;
decrypting (S224) the encrypted master key using the decrypted session key; and
reencrypting (S226) the decrypted master key using the hardware key.

2. The method of claim 1, further comprising storing (S228) the reencrypted master key.

3. The method of claim 1, further comprising decrypting the at least one secret using the master key and using the at least one secret.

4. The method of claim 1, wherein the session key and the at least one encrypted secret are received from a first entity and the encrypted master key is received from a second entity, distinct from the first entity.

5. The method of claim 1, further comprising receiving (230) an encrypted software image and a signature for the software image, decrypting (S232) the encrypted software image using the hardware key to obtain an unencrypted software image, verifying the signature, and if the signature is successfully verified, executing (S232) the unencrypted software image to prove that the software image booted and executes and that other software in the device is legitimate to run on the device.

6. A device (140) comprising:
memory (144);
at least one communication interface (141) configured to:
receive a session key;
receive at least one encrypted secret, the at least one secret encrypted using a master key; and
receive the master key encrypted using the session key;
a hardware cryptographic engine (143) configured to:
encrypt the session key using a hardware key unavailable outside the cryptographic engine to obtain an encrypted session key;
store the encrypted session key in the memory (144);
decrypt the encrypted session key using the hardware key; and
reencrypt the decrypted master key using the hardware key;
wherein the cryptographic engine (143) is further configured to decrypt the encrypted master key using the decrypted session key or the device further comprises at least one hardware processor (142) configured to decrypt the encrypted master key using the decrypted session key.

7. The device of claim 6, wherein the hardware cryptographic engine is further configured to store the reencrypted master key in the memory.

8. The device of claim 6, wherein at least one of the cryptographic engine (143) and the at least one hardware processor (142) is further configured to decrypt the at least one secret using the master key and use the at least one secret.

9. The device of claim 6, wherein the session key and the at least one encrypted secret are received from a first entity and the encrypted master key is received from a second entity, distinct from the first entity.

10. The device of claim 6, wherein the at least one communication interface (141) is further configured to receive an encrypted software image and a signature for the software image, at least one of the cryptographic engine (143) and the at least one hardware processor (142) is further configured to decrypt the encrypted software image using the hardware key to obtain an unencrypted software image, verify the signature, and if the signature is successfully verified, wherein the at least one hardware processor is further configured to execute the unencrypted software image to prove that the software image booted and executes and that other software in the device is legitimate to run on the device.
